# DEMANDE DE BREVET EUROPEEN

(11) **EP 4 748 722 A1**
(43) Date de publication de la demande: **27.05.2026**
(21) Numéro de dépôt: 25218499.9
(22) Date de dépôt: 25.11.2025
(51) Int. Cl.: B64G 1/00, B64G 1/44, B64G 1/50, B64G 1/64, B64G 1/66

(54) **ENSEMBLE PRÉVU POUR ÊTRE EMBARQUÉ DANS UN ÉTAGE SUPÉRIEUR D'UN LANCEUR SPATIAL, SATELLITE ET LANCEUR SPATIAL CORRESPONDANTS**

(30) Priorité: 26.11.2024 FR 2412987
(71) Demandeur: THALES, 92190 Meudon (FR)
(72) Inventeur: BOFFELLI, Stéphane, 06150 CANNES (FR); LACAMBRE, Jean-Marc, 06150 CANNES (FR)
(74) Mandataire: Lavoix

(57) **Abrégé**

L'ensemble (23) comprend ;
- un dispenseur (26) fixé à l'étage supérieur (24), le dispenseur ( 26) comprenant un tube (39) ayant un axe central (C) et délimité par une surface périphérique externe (41) ;
- une pluralité de satellites (27), chaque satellite (27) comprenant un corps (45) présentant deux faces latérales (47) opposées l'une à l'autre, chaque face latérale (47) étant pourvue d'un dispositif de dissipation d'énergie thermique (49), chaque satellite (27) étant fixé à la surface périphérique externe (41) du tube (39) dans une orientation telle que l'une de ses deux faces latérales (47) est tournée vers la surface périphérique externe (41).

## Description

L'invention concerne en général le domaine des constellations de satellites, notamment les constellations de satellites de fortes puissances.

Les satellites de télécommunication en orbite MEO (Medium Earth Orbit ou Orbite Terre Moyenne) sont calés entre 6000 km et 25000 km d'altitude. Ces satellites sont typiquement de fortes puissances, du fait que leur couverture utile (surface de la terre desservie par le satellite) est importante, et du fait que la distance satellite-utilisateur est grande.

Un satellite de forte puissance a typiquement un générateur solaire de grande dimension, en vue de produire une puissance électrique importante. En conséquence, il a également des radiateurs thermiques grands et efficaces, puisque la majeure partie de la puissance électrique est transformée en chaleur, ensuite dissipée vers l'espace à l'extérieur du satellite.

Par ailleurs, pour les constellations de satellites, il est impératif que ces satellites puissent être lancés par groupe dans un seul lanceur, et que le coût unitaire des satellites soit contenu.

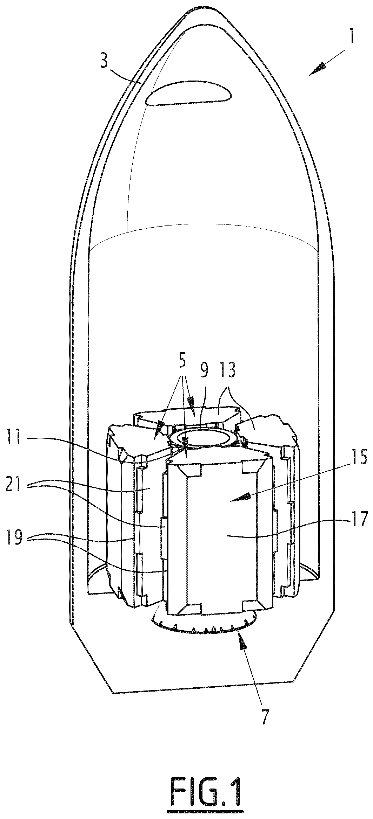

Pour les satellites calés en orbite basse, de faible puissance, il est possible d'utiliser un lanceur ayant un étage supérieur du type représenté sur la figure 1.

L'étage supérieur 1 du lanceur comporte une coiffe 3, les satellites 5 étant logés dans la coiffe 3.

Un dispenseur 7 est logé dans la coiffe 3 et fixé sur l'étage supérieur du lanceur.

Le dispenseur 7 comprend un tube 9, délimité par une surface périphérique externe 11.

Les satellites 5 sont fixés sur le dispenseur 7 par la face anti-terre 13.

Le dispenseur 7, également appelé distributeur, est conçu pour libérer les satellites au point où ceux-ci doivent être déployés.

Comme visible sur la figure 1, de manière à optimiser l'utilisation de l'espace disponible à l'intérieur de la coiffe 3, chaque satellite 5 est doté d'un corps 15 présentant, perpendiculairement à l'axe central du tube 9, une section trapézoïdale.

La face terre 17 constitue la grande base de la section trapézoïdale, et la face anti-terre 13 la petite base. Le corps 15 du satellite présente également deux faces latérales 19 obliques, convergentes l'une vers l'autre de la face terre 17 à la face anti-terre 13.

Les ailes 21 portant les générateurs électriques solaires sont fixées sur les faces latérales 19 pendant le lancement. Les faces latérales 19 sont pourvues de moyens de dissipation d'énergie thermique, utilisées une fois le satellite séparé du dispenseur, et les ailes 21 déployées.

L'utilisation d'un tel agencement pour des satellites de plus grande puissance pose plusieurs problèmes.

Les faces latérales 19 sont de petites tailles, du fait du débattement limité existant radialement entre le tube 9 et la coiffe 3. Elles sont peu efficaces pour la dissipation d'énergie thermique, à cause de l'angle entre les faces latérales 19 et la face terre 17 : quand le satellite remplit sa mission avec la face terre 17 pointant vers la Terre, le soleil éclaire les faces latérales du satellite, les réchauffe et limite leur efficacité pour la dissipation d'énergie thermique.

A l'intérieur de la coiffe, les panneaux constituant l'aile sont rangés en vis-à-vis des faces latérales. Ils sont sensiblement de mêmes tailles que les faces latérales. Leur largeur ne peut pas être augmentée. Pour augmenter la puissance du générateur électrique solaire, il est donc nécessaire d'allonger les panneaux parallèlement à l'axe central du tube. De tels panneaux, longs et étroits, sont difficiles et couteux à fabriquer.

L'augmentation de la puissance électrique peut aussi être obtenue en multipliant le nombre de panneaux constituant l'aile, ce qui pose là encore des problèmes de faisabilité industrielle et de coût.

Dans ce contexte, l'invention vise à proposer un ensemble comprenant un dispenseur et une pluralité de satellites, qui soit adapté au lancement de constellations de satellites de fortes puissances, et qui ne présente pas les défauts ci-dessus.

À cette fin, l'invention porte sur un ensemble prévu pour être embarqué dans un étage supérieur d'un lanceur spatial, l'ensemble comprenant ;
- un dispenseur fixé à l'étage supérieur, le dispenseur comprenant un tube ayant un axe central et délimité par une surface périphérique externe ;
- une pluralité de satellites, chaque satellite comprenant un corps présentant deux faces latérales opposées l'une à l'autre, chaque face latérale étant pourvue d'un dispositif de dissipation d'énergie thermique, chaque satellite étant fixé à la surface périphérique externe du tube (39) dans une orientation telle que l'une de ses deux faces latérales est tournée vers la surface périphérique externe.

Le fait que chaque satellite soit fixé à la surface périphérique externe du tube longitudinal dans une orientation telle que l'une de ses deux faces latérales est tournée vers la surface périphérique externe permet de loger à l'intérieur de la coiffe des satellites ayant des faces latérales de grande taille.

Ces faces latérales sont orientées tangentiellement par rapport à l'axe central. En d'autres termes, chaque face latérale est perpendiculaire à un plan radial, c'est-à-dire contenant l'axe central. Cette face latérale peut être plus grande que quand le satellite est dans l'orientation représentée sur la figure 1, c'est-à-dire dans une orientation sensiblement radiale par rapport à l'axe central.

Ceci permet de créer des moyens de dissipation d'énergie thermique de grande capacité, du fait de la grande taille des faces latérales.

Ceci permet aussi de prévoir pour les ailes des panneaux de grandes tailles, et donc d'embarquer des générateurs électriques solaires de fortes puissances.

L'ensemble peut en outre présenter une ou plusieurs des caractéristiques ci-dessous, considérées individuellement ou selon toutes les combinaisons techniquement possibles :
- les deux faces latérales du corps de chaque satellite sont sensiblement parallèles l'une à l'autre ;
- le corps de chaque satellite est sensiblement parallélépipédique ;
- chaque satellite comporte une aile ayant plusieurs panneaux chacun équipé d'un réseau électrique de cellules solaires, ladite aile étant dans une configuration pliée dans laquelle les panneaux sont agencés les uns parallèles aux autres entre la surface périphérique externe du tube et la face latérale du corps tournée vers ladite surface périphérique externe ;
- la face latérale tournée vers la surface périphérique externe porte des organes de fixation à la surface périphérique externe ;
- les organes de fixation sont agencés, selon l'axe central, de part et d'autre de l'aile ;
- le corps présente une face terre et une face anti-terre opposées l'une à l'autre, le satellite comportant au moins une antenne d'émission d'un signal électromagnétique portée par la face terre, la face terre et la face anti-terre étant sensiblement parallèles à l'axe central ;
les satellites sont agencés en au moins un anneau, autour de l'axe central.

Selon un second aspect, l'invention porte sur un satellite configuré pour être tembarqué dans un étage supérieur d'un lanceur spatial, un dispenseur étant fixé à l'étage supérieur, le dispenseur comprenant un tube ayant un axe central et délimité par une surface périphérique externe.
le satellite comprenant un corps présentant deux faces latérales opposées l'une à l'autre, chaque face latérale étant pourvue d'un dispositif de dissipation d'énergie thermique, le satellite étant configuré pour être fixé à la surface périphérique externe du tube dans une orientation telle que l'une de ses deux faces latérales est tournée vers la surface périphérique externe.

Le satellite peut en outre présenter la caractéristique suivante : la face latérale tournée vers la surface périphérique externe du dispenseur porte des organes de fixation à la surface périphérique externe.

Selon un troisième aspect, l'invention porte sur un lanceur spatial comprenant :
- un étage de propulsion ;
- un étage supérieur équipé d'un adaptateur fixé à l'étage de propulsion et d'une coiffe ;
- un ensemble ayant les caractéristiques ci-dessus, le dispenseur étant fixé à l'adaptateur.

D'autres caractéristiques et avantages de l'invention ressortiront de la description détaillée qui en est donnée ci-dessous, à titre indicatif et nullement limitatif, en référence aux figures annexées, parmi lesquelles :
- [Fig.1] La figure 1 est une vue en perspective de l'étage supérieur d'un lanceur spatial embarquant des satellites accrochés au dispenseur par leurs faces anti-terre ;
- [Fig.2] La figure 2 est une représentation schématique simplifiée d'un ensemble selon l'invention, avec un lanceur et une pluralité de satellites, une partie de la coiffe de l'étage supérieur n'étant pas représentée de manière à laisser apparaitre le dispenseur et les satellites accrochés à celui-ci par leurs faces latérales ;
- [Fig.3] La figure 3 est une vue en perspective du dispenseur et des satellites de l'ensemble de la figure 2 ;
- [Fig.4] La figure 4 est une vue en perspective d'un satellite des figures 2 et 3 ; et
- [Fig.5] La figure 5 est une vue partielle, en perspective du dispenseur et des satellites de la figure 3, considérée selon l'incidence de la flèche V matérialisée sur la figure 3.

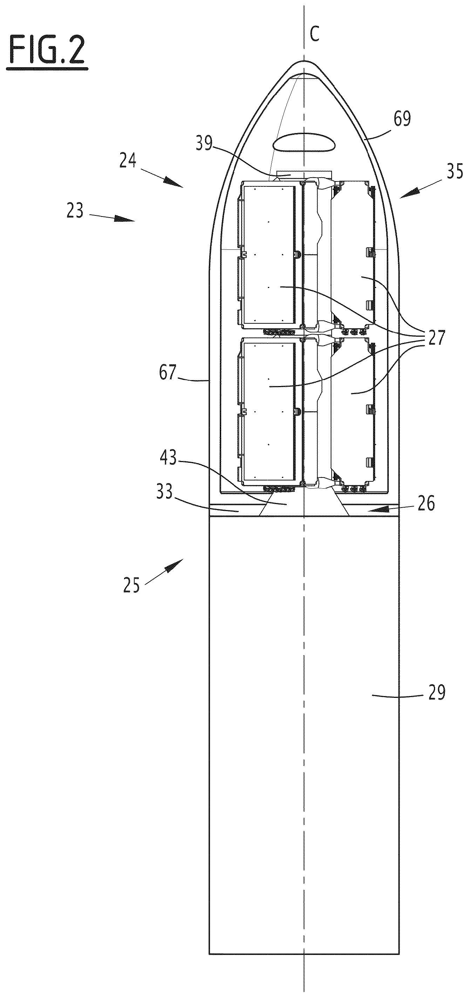

L'ensemble 23 représenté sur la figure 2 est prévu pour être embarqué dans l'étage supérieur 24 d'un lanceur spatial 25.

Cet ensemble 23 comprend un dispenseur 26 fixé à l'étage supérieur 24 et une pluralité de satellites 27.

Les satellites 27 appartiennent typiquement à une constellation de satellites, prévue pour les télécommunications ou pour être intégrée dans un système GPS (Ground Positioning System, ou système de positionnement au sol), ou tout autre application nécessitant une forme puissance satellite.

Les satellites 27 sont de forte puissance. En d'autres termes, ils sont équipés d'équipements d'émission d'ondes électromagnétiques de forte puissance. On entend par forte puissance une puissance supérieure à 3 kW.

Ces satellites sont en particulier destinés à être positionnés en orbite MEO, c'est-à-dire entre 6000 et 25000 km d'altitude, mais l'invention n'est pas limitée à ces orbites et peut être utilisée sur n'importe quelle application nécessitant une forte puissance satellite, quelle que soit son orbite.

Le lanceur 25 est du type adapté pour emporter les satellites jusqu'à ladite altitude.

De manière classique, le lanceur spatial 25 comporte un étage inférieur de propulsion 29.

L'étage inférieur 29 comporte un ou plusieurs moteurs et une réserve de carburant. Il est de type classique et ne sera pas décrit ici.

L'étage supérieur 24 comprend :
- un adaptateur 33 fixé à l'étage de propulsion 29 ;
- une coiffe 35.

La coiffe 35 est fixée à l'adaptateur 33.

La pluralité de satellites 27 est logée dans la coiffe 35.

Le dispenseur 26 est logé dans la coiffe 35. Il est fixé sur l'adaptateur 33.

Le dispenseur 26 comprend un tube 39 ayant un axe central C et délimité par une surface périphérique externe 41. Chaque satellite 27 est fixé sur la surface périphérique externe 41 du tube 39.

Comme décrit ci-dessus, le dispenseur 26 est prévu pour supporter les satellites 27 pendant le lancement, les satellites restant fixés au tube 39 jusqu'aux positions où ils doivent être déployés.

Une fois à sa position nominale, chaque satellite 27 est alors libéré du dispenseur 26.

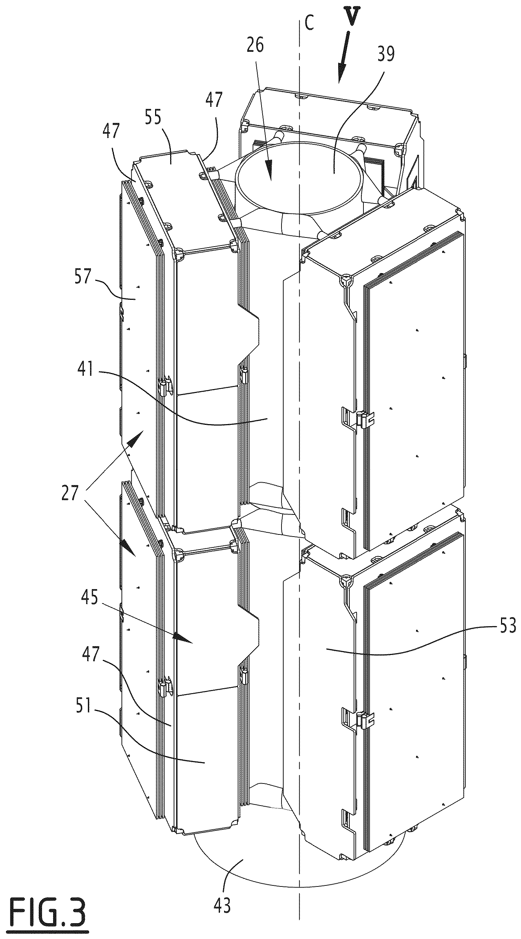

Comme visible notamment sur la figure 3, le dispenseur 26 comporte une base 43 sensiblement tronconique, fixée à une extrémité axiale du tube 39. La base 43 est fixée de à l'adaptateur 33, par des moyens non représentés.

L'axe central C du tube 39 est selon la hauteur du lanceur spatial 25.

En d'autres termes, le lanceur spatial 25 est prévu pour se déplacer selon l'axe central C au moment du décollage. L'étage de propulsion 29 est allongé selon l'axe central C. L'étage supérieur 24 prolonge l'étage de propulsion 29 selon l'axe central C.

L'axe central C du tube correspond à l'axe central de l'étage supérieur 24, et plus généralement à l'axe central du lanceur spatial 25.

Le tube 39 est creux dans l'exemple représenté. Il est généralement de section circulaire, perpendiculairement à l'axe central C.

Ainsi, la surface périphérique externe 41 est généralement une surface cylindrique de base circulaire.

Chaque satellite 27 comprend un corps 45 présentant deux faces latérales 47 opposées l'une à l'autre.

Chaque face latérale 47 est pourvue d'un dispositif de dissipation d'énergie thermique 49.

Les faces latérales 47 sont planes. Elles sont sensiblement parallèles l'une à l'autre.

Les dispositifs de dissipation d'énergie thermique 49 sont prévus pour dissiper l'énergie thermique de manière radiative. Ils sont connus et ne seront pas décrits ici en détail.

Typiquement, le corps 45 de chaque satellite est sensiblement parallélépipédique.

Outre les deux faces latérales 47, il comporte encore une face anti-terre 51 et une face terre 53 opposées l'une à l'autre.

Ces faces sont planes et sensiblement parallèles l'une à l'autre.

La face terre 53 est prévue pour être tournée vers la terre une fois le satellite 27 déployé sur son orbite opérationnelle. La face anti-terre 51 est prévue pour être tournée à l'opposé de la terre une fois le satellite 27 déployé sur son orbite opérationnelle.

La face terre 53 porte au moins une antenne d'émission d'un signal électromagnétique, non représentée sur les figures.

Le corps 45 présente encore deux faces d'extrémité 55, opposées l'une à l'autre.

Les faces d'extrémité 55 sont planes et sensiblement parallèles l'une à l'autre.

Les faces d'extrémité 55 sont sensiblement perpendiculaires à la face terre 53 et à la face anti-terre 51, et sont sensiblement perpendiculaires aux faces latérales 47.

Les faces latérales 47 sont sensiblement perpendiculaires à la face terre 53 et à la face anti-terre 51.

Chaque satellite 27 comporte encore une ou deux ailes 57 ayant plusieurs panneaux 59 chacun équipé d'un réseau électrique de cellules solaires 61. Les panneaux 59 sont agencés en une ligne et articulés les uns aux autres.

L'aile 57 est ainsi susceptible d'adopter une configuration pliée dans laquelle les panneaux 59 sont superposés les uns sur les autres, et placés dans des plans parallèles les uns aux autres.

L'aile 57 est également susceptible d'adopter une configuration déployée, dans laquelle les panneaux sont agencés en ligne, sensiblement dans un même plan. Ils sont juxtaposés les uns à côté des autres.

L'aile 57 est liée à l'une des faces latérales 47.

Typiquement, le satellite comporte deux ailes 57 du type décrit ci-dessus.

Quand le satellite 25 est doté de deux ailes 57, les deux ailes 57 sont liées aux deux faces latérales opposées 47.

Le réseau électrique de cellules solaires 61 équipant les panneaux 59 est de type connu et ne sera pas décrit ici.

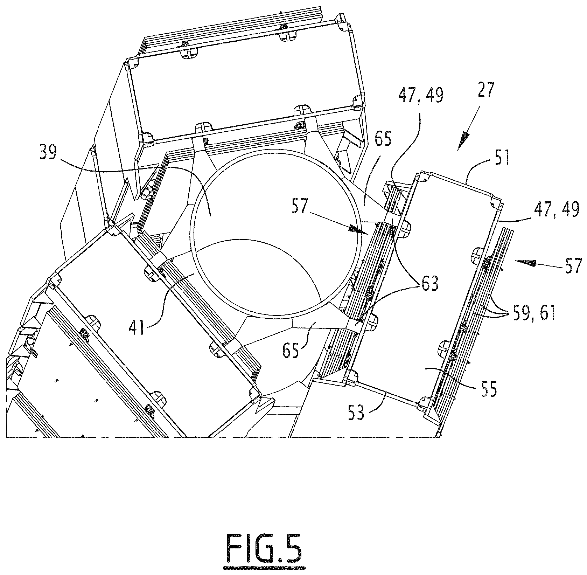

Comme illustré notamment sur les figures 3 et 5, chaque satellite 27 est fixé à la surface périphérique externe 41 du tube 39 dans une orientation telle que l'une des deux faces latérales 47 est tournée vers la surface périphérique externe 41.

En d'autres termes, ladite face latérale 47 est placée en vis-à-vis et à proximité de la surface périphérique externe 41. L'autre face latérale 47 est tournée vers la coiffe 35.

La face latérale 47 en vis-à-vis de la surface périphérique externe 41 est perpendiculaire à un plan radial P contenant l'axe central C (figure 5).

L'aile 57 du satellite est agencée entre la surface périphérique externe 41 du tube et la face latérale 47 du corps tournée vers la surface périphérique externe. L'aile 57 est dans sa configuration pliée.

Plus précisément, les panneaux 59 de ladite aile sont superposés les uns aux autres, et sont placés parallèlement à ladite face latérale 47.

Les panneaux 59 sont ainsi placés dans un intervalle ménagé, suivant une direction radiale par rapport à l'axe central C, entre la surface périphérique externe du dispenseur 41 et la face latérale 47.

L'aile 57 éventuellement liée à l'autre face latérale 47 est agencée dans sa configuration pliée, entre l'autre face latérale 47 et la surface interne de la coiffe 35.

Comme visible plus précisément sur les figures 3 et 5, la face latérale 47 tournée vers la surface périphérique externe 41 porte des organes 63 de fixation à la surface périphérique externe 41.

Ces organes de fixation 63 sont prévus pour coopérer avec des organes de fixation complémentaires 65 ménagés sur la surface périphérique externe 41.

Les organes de fixation 63 et les organes de fixation complémentaires 65 sont de type connu et ne seront pas décrits de manière détaillée ici. Ils permettent de fixer le satellite 27 de manière libérable au dispenseur 26.

Avantageusement, les organes de fixation 63 sont agencés longitudinalement de part et d'autre de l'aile 57.

Autrement dit, un ou plusieurs organes de fixation 63 sont agencés, suivant l'axe central C, d'un côté de l'aile 57, et un ou plusieurs organes de fixation 63 sont agencés, suivant l'axe central C, de l'autre côté de l'aile 57.

Dans l'exemple représenté, il existe deux organes de fixation 63 d'un côté de l'aile 57 et deux autres de l'autre côté de l'aile 57.

Les organes de fixation 57 sont placés aux deux extrémités axiales de la face latérale 47, à proximité immédiate des faces d'extrémité 55.

Le satellite 27 est fixé au dispenseur 26 de telle sorte que la face terre 53 et la face anti-terre 51 soient sensiblement parallèles à l'axe central longitudinal C.

Les faces d'extrémité 55 sont perpendiculaires à l'axe central longitudinal C.

Comme visible sur la figure 2, la coiffe 35 comporte une partie principale 67 sensiblement cylindrique, prolongée selon l'axe central C par un nez 69 en forme d'obus. La partie principale 67 est solidaire de l'adaptateur 33. Le nez 69 pointe à l'opposé de l'étage inférieur 29.

La partie principale 67 et la base du nez 69 sont agencées autour des satellites 27.

Les satellites 27 sont agencés en au moins un cercle, autour de l'axe central C.

Les satellites 27 sont par exemple agencés en un seul cercle. En variante, les satellites forment plusieurs cercles autour de l'axe central C. Les cercles sont superposés les uns au-dessus des autres, suivant l'axe central C. Dans l'exemple représenté sur les figures 1 et 3, les satellites 27 sont agencés en deux cercles.

Chaque cercle comporte un nombre de satellites 27 fonction de la taille du corps 45 du satellite et du diamètre de la coiffe 35.

Par exemple, chaque cercle comporte deux, trois, quatre ou plus de quatre satellites 27.

Dans l'exemple représenté, chacun des deux cercles comporte trois satellites 27.

Les satellites 27 sont circonférentiellement régulièrement espacés autour de l'axe central C.

Quand il existe plusieurs cercles, les satellites 27 de chaque cercle sont agencés aux mêmes positions angulaires d'un cercle à l'autre.

Comme visible notamment sur la figure 3, il existe entre la face terre 53 d'un satellite 27 et la face anti-terre 51 du satellite 27 voisin sur le cercle, un espace permettant de loger des équipements montés sur la face terre 53 ou sur la face anti-terre 51.

Par exemple, les équipements suivants sont montés sur la face anti-terre 51 : tête optique permettant de créer des liens inter-satellites, etc.

Du fait que certains ou tous ces équipements sont montés sur la face anti-terre 51, il est possible de monter sur la face terre 53 des charges utiles secondaires de tous types (observation, télécommunications, navigation...).

En revanche, il existe peu ou pas d'espace disponible entre la face latérale 47 située en vis-à-vis de la coiffe 35 et ladite coiffe 35.

Ce volume est essentiellement utilisé pour loger l'aile 57 liée à la face latérale 47 en vis-à-vis de la coiffe 35.

La hauteur de la face terre 53 et de la face anti-terre 51, prise selon l'axe central C, dépend de la hauteur du volume disponible à l'intérieur de la coiffe 35 et du nombre de satellites 27 superposés suivant l'axe central C.

La largeur de la face terre 53 et de la face anti-terre 51 dépend essentiellement de l'espace radial disponible entre la surface périphérique externe 41 du tube et la surface interne de la coiffe 35.

Compte tenu de la géométrie usuelle de la coiffe 35, la face terre 53 et la face anti-terre 51 présentent une hauteur très supérieure à leur largeur.

Les faces latérales 47 présentent la même hauteur que la face terre 53 et la face anti-terre 51. Leur largeur dépend du diamètre de la coiffe, et du nombre de satellites agencés en cercle autour du tube 39. Néanmoins, la largeur de chaque face latérale 47 est très supérieure à la largeur de la face terre 53 et de la face anti-terre 51.

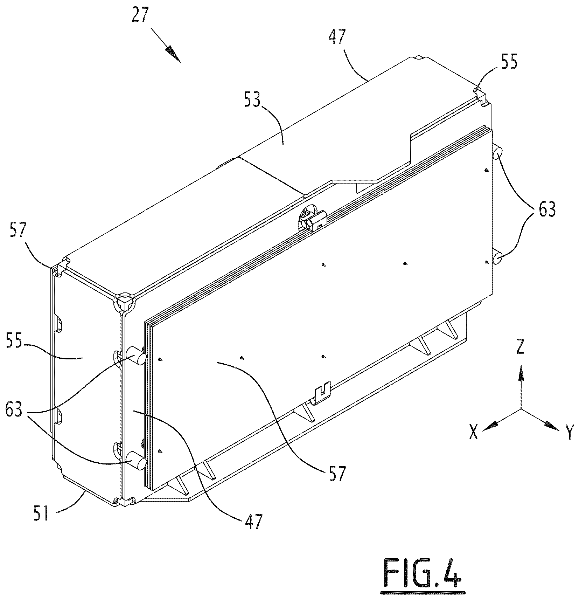

Certains avantages de l'invention apparaissent clairement en comparant la figure 1 et les figures 3 et 4, en supposant que la coiffe a la même hauteur et le même diamètre dans les deux cas, et que le tube a la même hauteur et le même diamètre dans les deux cas.

Sur la figure 1, six satellites 5 avec des corps de section transversale trapézoïdale sont agencés en un cercle autour du tube 9. Ces six satellites 5 sont fixés par les faces anti-terre 13 au tube 9. Ils occupent sensiblement toute la hauteur disponible à l'intérieur de la coiffe. Ce dernier point n'est pas représenté fidèlement sur la figure 1.

Au contraire, sur les figures 2 et 3, deux cercles de trois satellites 27 sont agencés l'un au-dessus de l'autre dans la coiffe. Les satellites 27 sont fixés au tube 39 par une des faces latérales 47 de leurs corps 45.

Sur la figure 1, les faces latérales 19, portant les ailes 21 et équipées de dissipateur thermique, sont de grande hauteur, puisqu'elles s'étendent sensiblement sur toute la hauteur de la coiffe. En revanche, elles sont de faible largeur, cette largeur correspondant sensiblement à la largeur de la face terre 53 et de la face anti-terre 51 sur les figures 2 et 3.

Au contraire, sur les figures 2 et 3, les faces latérales 47 sont de hauteur modérée, correspondant sensiblement à la moitié de la hauteur disponible à l'intérieur de la coiffe 35. En revanche, les faces latérales 47 sont beaucoup plus larges que les faces latérales 19 de la figure 1. Le facteur de forme des faces latérales, c'est-à-dire le ratio entre la hauteur et la largeur, est donc très différent sur la figure 1 d'une part et sur les figures 2 et 3 d'autre part. Ce facteur de forme est bien plus petit sur les figures 2 et 3 que sur la figure 1. En conséquence, les panneaux des ailes des satellites des figures 2 et 3 ont eux aussi un facteur de forme beaucoup plus petit que les panneaux des ailes des satellites de la figure 1.

Ceci fait que les ailes des satellites des figures 2 et 3 sont beaucoup plus faciles à fabriquer que les ailes des satellites de la figure 1.

L'ensemble décrit ci-dessus présente de multiples avantages.

Du fait que les deux faces latérales du corps de chaque satellite sont parallèles l'une à l'autre, l'efficacité des dispositifs de dissipation d'énergie thermique équipant les faces latérales est élevée. En effet, ces faces latérales peuvent être orientées de sorte à n'être jamais exposées au rayonnement solaire, ce qui permet une excellente efficacité de la dissipation thermique. Ce n'est pas le cas pour les faces latérales convergentes des satellites illustrés sur la figure 1, ce qui réduit l'efficacité de la rejection thermique des moyens de dissipation d'énergie thermique.

Du fait que chaque satellite comporte une aile ayant plusieurs panneaux, chacun équipé d'un générateur électrique solaire, ladite aile étant à bord du lanceur dans une configuration pliée dans laquelle les panneaux sont agencés les uns parallèles aux autres entre la surface périphérique externe du tube et la surface latérale du corps tournée vers ladite surface périphérique externe, l'aile peut présenter une grande surface. La puissance électrique disponible à bord du satellite est ainsi très élevée.

Lorsque la face latérale tournée vers la surface périphérique externe porte des organes de fixation à la surface périphérique externe, la fixation du satellite sur le tube est facilitée.

Lorsque les organes de fixation sont agencés, selon l'axe central, de part et d'autre de l'aile, il est possible d'implanter des ailes de grande taille entre le corps du satellite et le tube.

Lorsque le corps présente une face terre et une face anti-terre opposées l'une à l'autre et sensiblement parallèles à l'axe central longitudinal, ces faces offrent une superficie suffisante pour y fixer des équipements tels que des antennes.

Lorsque les satellites sont agencés en au moins un cercle, autour de l'axe central longitudinal, il est possible d'utiliser l'espace libre entre les satellites pour loger des équipements fixés à la face terre et/ou la face anti-terre des satellites.

L'ensemble décrit ci-dessus peut présenter de multiples variantes.

Le dispenseur a été décrit ci-dessus comme étant rigidement fixé à l'étage supérieur. Il n'est pas séparable de l'étage supérieur. En variante, le dispenseur est fixé de manière libérable à l'étage supérieur. Il peut être détaché avec les satellites et accompagne ceux-ci jusqu'au point où ils vont être libérés. Dans ce cas, le dispenseur est avantageusement motorisé, de manière à pouvoir se propulser de manière autonome jusqu'au point de libération.

Le tube du dispenseur a été décrit comme étant de section circulaire. En variante, il est rectangulaire, hexagonal, triangulaire, ou de toute autre forme adaptée.

Les faces latérales du corps du satellite ne sont pas nécessairement rigoureusement parallèles entre elles, bien que le principe géométrique général d'aménagement des satellites autour du dispenseur et sous la coiffe reste le même.

De même le corps du satellite n'est pas nécessairement rigoureusement parallélépipédique, bien que le principe géométrique général d'aménagement des satellites autour du dispenseur et sous la coiffe reste le même.

## Revendications

1. Ensemble prévu pour être embarqué dans un étage supérieur (24) d'un lanceur spatial (25), l'ensemble (23) comprenant ;
- un dispenseur (26) fixé à l'étage supérieur (24), le dispenseur (26) comprenant un tube (39) ayant un axe central (C) et délimité par une surface périphérique externe (41) ;
- une pluralité de satellites (27), chaque satellite (27) comprenant un corps (45) présentant deux faces latérales (47) opposées l'une à l'autre, chaque face latérale (47) étant pourvue d'un dispositif de dissipation d'énergie thermique (49), chaque satellite (27) étant fixé à la surface périphérique externe (41) du tube (39) dans une orientation telle que l'une de ses deux faces latérales (47) est tournée vers la surface périphérique externe (41).

2. Ensemble selon la revendication 1, dans lequel les deux faces latérales (47) du corps (45) de chaque satellite (27) sont sensiblement parallèles l'une à l'autre.

3. Ensemble selon la revendication 1 ou 2, dans lequel le corps (45) de chaque satellite (27) est sensiblement parallélépipédique.

4. Ensemble selon l'une quelconque des revendications 1 à 3, dans lequel chaque satellite (27) comporte une aile (57) ayant plusieurs panneaux (59) chacun équipé d'un réseau électrique de cellules solaires (61), ladite aile (57) étant dans une configuration pliée dans laquelle les panneaux (59) sont agencés les uns parallèles aux autres entre la surface périphérique externe (41) du tube (39) et la face latérale (47) du corps (45) tournée vers ladite surface périphérique externe (41).

5. Ensemble selon l'une quelconque des revendications 1 à 4, dans lequel la face latérale (47) tournée vers la surface périphérique externe (41) porte des organes de fixation (63) à la surface périphérique externe (41).

6. Ensemble selon la revendication 5 en combinaison avec la revendication 4, dans lequel les organes de fixation (63) sont agencés, selon l'axe central (C), de part et d'autre de l'aile (57).

7. Ensemble selon l'une quelconque des revendications 1 à 6, dans lequel le corps (45) présente une face terre (53) et une face anti-terre (51) opposées l'une à l'autre, le satellite (27) comportant au moins une antenne (54) d'émission d'un signal électromagnétique portée par la face terre (53), la face terre (53) et la face anti-terre (51) étant sensiblement parallèles à l'axe central (C).

8. Ensemble selon l'une quelconque des revendications 1 à 7, dans lequel dans lequel les satellites (27) sont agencés en au moins un anneau, autour de l'axe central (C).

9. Satellite (27) configuré pour être embarqué dans un étage supérieur (24) d'un lanceur spatial (25), un dispenseur (26) étant fixé à l'étage supérieur (24), le dispenseur (26) comprenant un tube (39) ayant un axe central (C) et délimité par une surface périphérique externe (41) ;
le satellite (27) comprenant un corps (45) présentant deux faces latérales (47) opposées l'une à l'autre, chaque face latérale (47) étant pourvue d'un dispositif de dissipation d'énergie thermique (49), le satellite (27) étant configuré pour être fixé à la surface périphérique externe (41) du tube (39) dans une orientation telle que l'une de ses deux faces latérales (47) est tournée vers la surface périphérique externe (41).

10. Satellite selon la revendication 9, dans lequel la face latérale (47) tournée vers la surface périphérique externe du dispenseur (41) porte des organes de fixation (63) à la surface périphérique externe (41).

11. Lanceur spatial (25) comprenant :
- un étage de propulsion (29) ;
- un étage supérieur (24) équipé d'un adaptateur (33) fixé à l'étage de propulsion (29) et d'une coiffe (35) ;
- un ensemble (23) selon l'une quelconque des revendications 1 à 8, le dispenseur (26) étant fixé à l'adaptateur (33).
